# FASCICULE DE BREVET EUROPEEN

(11) **EP 1 472 442 B1**
(45) Date de publication et mention de la délivrance du brevet: **29.03.2006**
(21) Numéro de dépôt: 03718839.8
(22) Date de dépôt: 05.02.2003
(51) Int. Cl.: F01N 9/00, F01N 3/027, F02D 41/02

(54) **PROCEDE DE GESTION DE MOYENS DE DECOLMATAGE D UN FILTRE A PARTICULES.**
VERFAHREN ZUR STEUERUNG VON MITTELN ZUR REINIGUNG EINES PARTIKELFILTERS
METHOD FOR MANAGING PARTICULATE FILTER BACKWASHING MEANS

(30) Priorité: 05.02.2002 FR 0201340
(43) Date de publication de la demande: 03.11.2004
(73) Titulaire: Saint-Gobain Centre de Recherches et d'Etudes Européen, 92400 Courbevoie (FR)
(72) Inventeur: Bardon, Sébastien Rémi, F-69006 Lyon (FR); Mustel, William Pierre, F-95160 Montmorency (FR)
(74) Mandataire: Colas, Jean-Pierre
(86) Numéro de dépôt international: PCT/FR2003/000355
(87) Numéro de publication internationale: WO 2003/067048

(56) Documents cités:
- EP-A- 0 699 828
- EP-A- 0 859 132
- FR-A- 2 771 449
- FR-A- 2 774 421
- US-A- 4 424 671
- US-A- 4 549 398
- US-A- 5 287 698
- US-A- 5 786 565
- ROBERT BOSCH GMBH: "Kraftfahrtechnisches Taschenbuch" 1995 , VDI-VERLAG , DÜSSELDORF XP002242360 page 538 -page 540

## Description

La présente invention est relative à un procédé de décolmatage, par chauffage, d'un filtre à particules destiné à purifier des gaz d'échappement d'un moteur à combustion interne, en particulier d'un moteur à combustion interne équipant un véhicule automobile.

Un filtre à particules comporte classiquement des structures poreuses en nid d'abeille formant des corps filtrants pour la filtration des particules émises par les véhicules Diesel. Généralement, ces corps filtrants sont en céramique (cordiérite, carbure de silicium,...). Ils peuvent être monolithiques ou bien constitués de différents blocs. Dans ce dernier cas, les blocs sont assemblés entre eux par collage au moyen d'un ciment céramique. Le tout est ensuite usiné pour lui conférer la section souhaitée, ronde ou ovoïde en général. Le corps filtrant résultant peut comporter une pluralité de canaux, obturés à l'une ou l'autre de leurs extrémités, qui peuvent avoir, en section transversale, des formes et des diamètres différents. Le corps filtrant est généralement inséré dans une enveloppe méttallique, par exemple comme décrit dans FR-A-2 789 327.

Au cours de l'utilisation, des suies s'accumulent dans les canaux du corps filtrant, en particulier dans les canaux d'entrée, ce qui augmente la perte de charge due au corps filtrant et altère ainsi les performances du moteur. Pour cette raison, le corps filtrant doit être régénéré régulièrement (par exemple tous les 500 kilomètres).

La régénération, ou « décolmatage », consiste à oxyder les suies. Pour ce faire, il est nécessaire de chauffer le filtre. En effet, la température d'auto-inflammation des suies est de l'ordre de 600°C dans des conditions de fonctionnement classiques alors que la température des gaz d'échappement n'est, en moyenne, que de l'ordre de 300°C. Il est possible, cependant, d'ajouter des additifs dans le carburant qui permettent de catalyser la réaction d'oxydation des suies et d'abaisser la température d'auto-inflammation de 150°C environ.

Le chauffage peut concerner les gaz d'échappement, le corps filtrant ou bien même directement les suies. Différentes techniques ont été développées.

Une approche récente consiste à chauffer localement, en amont du corps filtrant, de manière à initier la combustion qui se propage alors progressivement dans l'ensemble du corps filtrant. Ce type de technique est par exemple décrit dans FR A 2 771 449 ou DE-A-19530749.

Les moyens de chauffage sont généralement reliés à une source d'alimentation en énergie électrique du véhicule.

Ils peuvent comporter des bougies céramiques, par exemple des bougies de préchauffage pour moteur Diesel, de simples résistances électriques, ou encore des allumeurs céramiques, comme décrits dans la demande de brevet français N°0013998 déposée le 31 octobre 2000 par la Demanderesse.

Dans l'état de la technique selon US 4 424 671 ou US 5 287 698 il est connu de déclencher la régénération d'un filtre à particules par opération des moyens de chauffage comme des resistances électriques ou des bruleurs quand un moteur délivre un couple inférieur à un seuil.

Le régime moteur peut varier considérablement entre le déclenchement du processus de régénération, c'est-à-dire la commande de la mise en marche des moyens de chauffage et le moment où les suies s'enflamment effectivement. Or une variation de régime peut fortement dégrader cette efficacité.

Le but de l'invention est de fournir un procédé de décolmatage permettant de limiter cette dégradation de l'efficacité de la régénération du filtre.

On atteint ce but au moyen d'un procédé de décolmatage selon la revendication 1.

On a constaté en effet que, dans des conditions de fonctionnement du moteur à un couple moteur inférieur à un seuil bas prédéterminé; l'inflammation des suies accumulées dans le corps filtrant du filtre et la propagation de la combustion de ces suies étaient peu influencées par le régime du moteur. En gérant les moyens de chauffage selon l'invention, on assure donc une régénération efficace du filtre, sensiblement indépendamment des variations du régime du moteur.

De préférence, on ne commande donc la mise en marche desdits moyens de chauffage que si le moteur délivre un couple moteur inférieur audit seuil bas.

Selon d'autres caractéristiques du procédé selon l'invention,
- on commande la mise en marche desdits moyens de chauffage pendant un fonctionnement au ralenti dudit moteur ou en l'absence de combustion dans ledit moteur ;
- ledit seuil bas est inférieur ou égal à 10% du couple moteur maximal dudit moteur ;
- on commande la mise en marche desdits moyens de chauffage après délivrance par ledit moteur d'un couple moteur supérieur à un seuil haut pendant au moins une durée prédéterminée;
- ledit seuil haut est supérieur ou égal à 30% du couple moteur maximal dudit moteur;
- ladite durée prédéterminée est supérieure ou égale à une minute;
- on ne commande ladite mise en marche desdits moyens de chauffage que si ledit filtre et/ou ledit moteur sont à des températures supérieures à des températures de seuil respectives ;
- on commande la mise en marche desdits moyens de chauffage après détection d'une masse minimale de suies dans ledit filtre ;
- on commande la mise en marche desdits moyens de chauffage au plus tard une minute après que ledit moteur a commencé à délivrer un couple moteur inférieur audit seuil bas ;
- on commande ladite mise en marche desdits moyens de chauffage dès que ledit moteur a commencé à délivrer un couple moteur inférieur audit seuil bas;
- on maintient en marche lesdits moyens de chauffage pendant au moins 5 secondes après ladite mise en marche ;
- on évalue ledit couple moteur délivré par ledit moteur, par mesure d'une position d'une pédale d'accélérateur ;
- lesdits moyens de chauffage comportent un point chaud dont la température augmente à partir d'une température supérieure ou égale à 20°C jusqu'à une température supérieure ou égale à 1000°C dans les 6 secondes qui suivent sa mise en marche;
- lesdits moyens de chauffage comportent des allumeurs du type Mini-Igniter®.

L'invention concerne également un dispositif pour la mise en oeuvre de ce procédé de décolmatage selon la revendication 16.

Selon d'autres caractéristiques du dispositif selon l'invention,
- des points chauds desdits moyens de chauffage sont disposés à l'intérieur ou sur une surface extérieure latérale dudit corps filtrant, de préférence sans faire saillie de ladite surface ;
- le dispositif comporte des moyens de détection de la rotation dudit moteur.

D'autres caractéristiques et avantages de la présente invention apparaîtront à la lecture de la description qui va suivre et à travers du dessin annexé dans lequel la figure unique représente schématiquement un dispositif selon l'invention, dans un mode de réalisation préféré de l'invention.

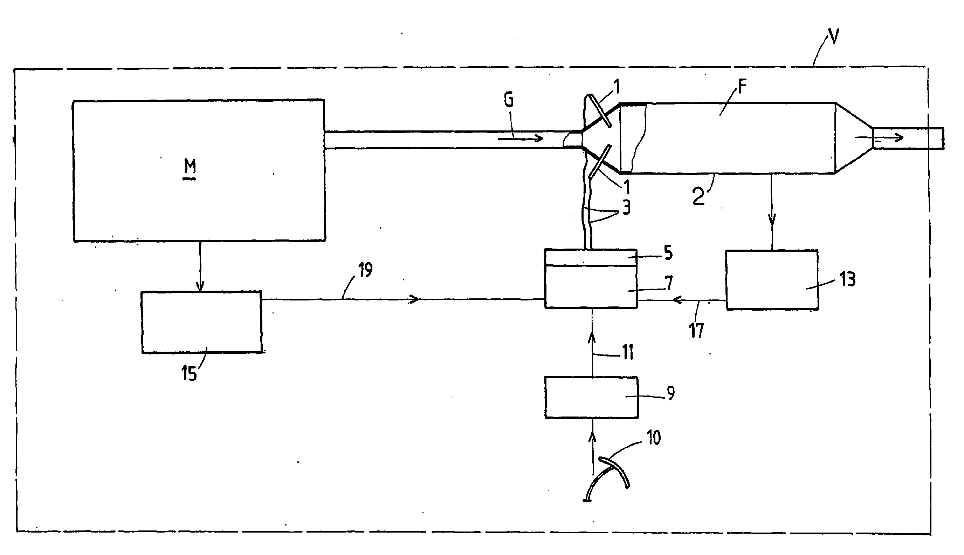

Le dispositif selon l'invention représenté sur la figure 1 comporte des allumeurs céramiques 1 disposés de manière à pouvoir chauffer un filtre à particules F destiné à purifier des gaz d'échappement G d'un moteur à combustion interne M d'un véhicule V.

Les allumeurs céramiques sont disposés de manière à chauffer directement les gaz G et les suies.

Les allumeurs céramiques 1 sont de petites pièces qui, lorsqu'elles sont traversées par un courant électrique, sont localement portées à une température très élevée (1200 à 1400°C). Ces allumeurs sont habituellement constitués d'un matériau céramique hautement résistif tel que le carbure de silicium, parfois en mélange avec d'autres composants céramiques.

De préférence, les allumeurs céramiques sont conformes à ceux décrits dans les brevets US 5 085 804 et US 5 045 237.

Les allumeurs selon US 5 085 804 comportent une zone chaude consistant principalement en un mélange fritté de 5 à 50% en volume de disiliciure de molybdène et de 50 à 95% en volume d'un mélange de carbure de silicium et de nitrure de silicium.

La porosité ouverte est inférieure ou égale à 4%, et la résistance en flexion au seuil conventionnel est d'au moins 207 MPa (30 000 psi).

Le rapport entre la résistivité à température ambiante et la résistivité à 1200°C des allumeurs selon US 5 085 804 est inférieure à 19,8 mais peut être aussi faible que 0,2. Un tel rapport signifie un temps de réponse très faible, le temps de réponse variant dans le même sens que ce rapport.

La zone chaude des allumeurs décrits dans US 5 085 804 peut être définie de la manière suivante :
(1) Epaisseur ou largeur d'au moins 0,0508 cm (0,020 in)ou superficie de section d'au moins 0,00258 cm² (0,0004 in²).
(2) Epaisseur ou largeur d'au plus 0,127 cm (0,050 in) ou superficie de section d'au plus 0,0161 cm² (0,0025 in²).
(3) Pour des sections transversales fines, longueur de zone chaude d'au plus environ 2,53 cm (1 in), le rapport longueur/supeficie étant d'au plus environ 2500 à 0,0258 cm² (0,004 in²).
(4) Pour les formes grosses et courtes, une longueur de zone chaude d'au moins 0,508 cm (0,2 in).

Les allumeurs décrits dans US 5 045 237 ont une zone chaude constituée principalement d'un mélange fritté de 5 à 50% en volume de disiliciure de molybdène et de 50 à 95% en volume d'un mélange de carbure de silicium et de nitrure d'aluminium. Les autres caractéristiques et les performances de ces allumeurs sont similaires à celles des allumeurs décrits dans US 5 085 804.

Des informations détaillées concernant la structure et la fabrication des allumeurs céramiques peuvent être trouvées dans les brevets des U.S.A. Nos. 5 191 508, 5 085 804, 5 045 237, 4 429 003 et 3 974 106, tous propriété de la Société NORTON COMPANY.

Les allumeurs céramiques 1 sont disposés de manière à chauffer des particules déposées sur un corps filtrant du filtre.

De préférence encore, les points chauds des allumeurs céramiques 1 sont disposés à l'intérieur du corps filtrant du filtre F, les allumeurs céramiques pouvant être totalement ou partiellement enfoncés dans le corps filtrant.

Un tel positionnement permet avantageusement une transmission efficace de l'énergie calorifique aux suies accumulées dans le corps filtrant du filtre F.

Dans une variante de l'invention, les allumeurs céramiques sont disposés sur la surface latérale extérieure 2, sensiblement cylindrique, du corps filtrant, de préférence enfoncés dans des logements, de préférence de forme complémentaire, ménagés sur cette surface 2. De préférence encore, la forme des logements est déterminée pour que les allumeurs ne fassent pas saillie de la surface 2.

Pour une information plus détaillée sur la disposition des allumeurs céramiques; on pourra se reporter à la demande de brevet français N°0013998.

Les allumeurs céramiques 1 sont reliés par des fils électriques 3 à des moyens de commande 5 destinés à les alimenter sélectivement avec un courant électrique d'allumage.

Selon l'invention, ce dispositif comporte en outre un calculateur 7 de gestion des moyens de commande 5 et des moyens d'évaluation 9 du couple moteur délivré par le moteur M, par exemple par mesure de la position d'une pédale d'accélérateur 10.

Les moyens d'évaluation 9 du couple moteur sont relié par une ligne 11 au calculateur 7 de gestion.

De préférence, le dispositif selon l'invention comporte encore des moyens 13 de mesure du degré de colmatage du filtre F et des moyens 15 de détection de la rotation du moteur M, transmettant leurs données au calculateur 7 par des lignes 17 et 19, respectivement.

Le fonctionnement du dispositif selon l'invention est le suivant.

Les moyens 13 de mesure du degré de colmatage du filtre F détectent un degré de colmatage nécessitant le déclenchement d'une opération de régénération et en informent le calculateur 7.

Avantageusement, avant de commander l'allumage des allumeurs céramiques 1, le calculateur 7 vérifie que les conditions a) et b) suivantes sont remplies:
a) Le moteur M tourne, ce qui permet de renouveler l'air dans le filtre F. En effet, faute de renouvellement de l'air, la combustion des suies s'arrêterait rapidement. Le calculateur 7 est informé par les moyens 15 de l'état tournant ou non tournant du moteur M.
b) Le filtre est chaud, c'est-à-dire que sa température dépasse une température minimale.

De préférence, le calculateur 7 considère que cette dernière condition est remplie quand le moteur M vient de fournir un couple moteur supérieur à un seuil haut Cₕₐᵤₜ prédéterminé, pendant une durée prédéterminée, par exemple pendant un roulage de quelques kilomètres du véhicule V.
Le seuil haut Cₕₐᵤₜ est de préférence fixé à une valeur supérieure ou égale à 30% du couple moteur maximal Cₘₐₓ que peut fournir le moteur M.
La durée prédéterminée est de préférence d'au moins une minute.

Selon l'invention, quand les deux conditions a) et b) sont remplies, le calculateur 7 attend qu'une troisième condition c) soit remplie, à savoir que le moteur M délivre un couple moteur inférieur à un seuil bas C_{bas} prédéterminé.

De préférence, le seuil bas C_{bas} est inférieur ou égal à 10% du couple moteur maximal Cₘₐₓ.

Le moteur M délivre un couple moteur inférieur au seuil bas C_{bas} notamment dans deux situations principales : l'absence de combustion et le fonctionnement en régime de ralenti.

On appelle « absence de combustion » dans le moteur, les phases de fonctionnement de ce moteur, pendant lesquelles aucune combustion ne se produit dans aucun des cylindres de ce moteur.

Dans un véhicule propulsé par un moteur à combustion interne, ces phases se produisent notamment lors d'une coupure d'injection de carburant, lorsque le conducteur du véhicule cesse d'appuyer sur la pédale de l'accélérateur 10. Dans un véhicule hybride « thermique - électrique », ces phases peuvent également se produire quand le moteur électrique fournit toute la puissance de propulsion du véhicule. Pour régénérer le filtre F, il conviendra néanmoins de maintenir le moteur thermique M tournant, conformément à la condition a).

Les moyens d'évaluation 9 fournissent au calculateur 7 une estimation du couple moteur délivré par le moteur M en fonction de la position de la pédale d'accélérateur 10. Cette estimation permet au calculateur 7 de déterminer quand le moteur M délivre un couple moteur inférieur au seuil bas C_{bas} ou supérieur au seuil haut Cₕₐᵤₜ.

La condition c) selon laquelle le moteur M doit délivrer un couple moteur inférieur au seuil bas C_{bas} est requise préalablement à l'allumage des allumeurs céramiques afin que les gaz G s'échappant du moteur M et entrant dans le filtre F conservent une teneur élevée en oxygène, de manière à favoriser l'inflammation des suies présentes dans le filtre F et la propagation de la combustion à l'ensemble des suies du corps filtrant.

Le plus rapidement possible après la réalisation de la condition c), de préférence au plus tard dans un délai d'une minute, le calculateur 7 provoque l'envoi, par les moyens de commande 5, d'un courant électrique d'allumage à travers les allumeurs céramiques 1.

Dans une variante de l'invention, le calculateur 7 commande l'allumage des allumeurs céramiques 1 dés que la condition c) est remplie, sans avoir nécessairement préalablement contrôlé le degré de colmatage du filtre, sa température ou la rotation du moteur. La probabilité de l'inflammation des suies en est réduite, mais l'architecture du dispositif en est simplifiée.

Les allumeurs céramiques 1 ont un temps de réponse très court. En effet, alors que les bougies classiques mettent de 10 à 40 secondes pour atteindre 1000°C, les allumeurs céramiques 1 ne mettent que 3 à 6 secondes pour atteindre la même température. Ceci est crucial puisque si le chauffage n'est pas suffisamment rapide, les suies ont tendance à se consumer sans flamme plutôt qu'à s'enflammer, ce qui gêne la propagation de la combustion.

Les allumeurs céramiques 1 ont de préférence une vitesse de montée en température supérieure à 150°C/s, de préférence supérieure à 200°C/s, de préférence encore supérieure à 300°C/s.

Les allumeurs céramiques selon l'invention préférés sont les Mini-Igniters® de la Société SAINT-GOBAIN ADVANCED CERAMICS, présentés dans le tableau 1 ci-dessous.

**Tableau 1 : Modèles de Mini-Igniters® préférés**

| Mini-Igniter : modèle | 300 | 401 | 601 | 405 | 600 |
|---|---|---|---|---|---|
| Temps de montée jusqu'à température nominale à partir de la température ambiante | 3s | 3s | 5s | <2s | <6s |
| Courant électrique en régime permanent | 1,5 à 2,5 A à 12V | 1,0 à 2,2A à 24V | 0,4 à 1,2A à 120V | 0,4 à 0,6A à 24V | 0,2 à 0,75A à 120V |
| Résistance électrique à température ambiante | 1,0 à 6,0 Ohms | 1,0 à 6,0 Ohms | 25 à 300 Ohms | 1 à 100 Ohms | 25 à 600 Ohms |
| Température nominale | entre 1035 et 1580°C | 1275 à 1455°C à 24V | 1275 à 1455°C à 120V | entre 1050 et 1500°C | 1150 à 1400°C à 120V |

Compte tenu des tensions habituellement disponibles dans les véhicules automobiles, les modèles 300 fonctionnant à 12 volts, et les modèles 401 et 405, fonctionnant à 24 volts, sont préférés.

Les phases de fonctionnement du moteur pendant lesquelles il délivre un couple moteur inférieur au seuil bas C_{bas} durent en général quelques secondes, par exemple le temps pour le véhicule V de ralentir et de s'arrêter. Pour que ces quelques secondes suffisent à mettre en marche les moyens de chauffage et à enflammer les suies, il est avantageux que ces moyens aient un temps de réponse très court.

Les allumeurs céramiques 1 sont donc particulièrement adaptés au procédé de gestion selon l'invention, d'autant plus qu'ils permettent un positionnement des points chauds à l'intérieur du corps filtrant.

Le calculateur 7 maintient le courant électrique d'allumage à travers les allumeurs céramiques 1 pendant une durée prédéterminée, de préférence d'au moins 5 secondes.

De préférence, le courant électrique d'allumage est maintenu pendant toute cette durée prédéterminée, même si entre temps le couple moteur fourni par le moteur M dépasse à nouveau le seuil bas C_{bas}.

La combustion des suies se prolonge jusqu'à ce qu'à ce que toutes les suies aient été consumées ou que les conditions de cette combustion ne soient plus réunies. Dans ce dernier cas, les suies s'éteignent d'elles-mêmes.

Bien entendu, la présente invention n'est pas limitée au mode de réalisation décrit et représenté, fourni à titre d'exemple illustratif et non limitatif.

En particulier, elle n'est pas limitée à un type de filtre particulier. Par exemple, elle est applicable que le filtre F soit catalysé ou non.

Elle s'étend également à des filtres traversés par des gaz d'échappement résultant de la combustion d'un carburant dans lequel a été ajouté un ou plusieurs additifs, notamment un additif destiné à catalyser la réaction d'oxydation des suies et/ou à abaisser leur température d'auto-inflammation.

## Revendications

1. Procédé de décolmatage, par chauffage, d'un filtre à particules (F) destiné à purifier des gaz d'échappement (G) d'un moteur à combustion interne (M), en particulier d'un moteur à combustion interne équipant un véhicule automobile (V), selon lequel on commande la mise en marche de moyens de chauffage (1) dudit filtre (F) quand ledit moteur (M) délivre un couple moteur inférieur à un seuil bas (C_{bas}) prédéterminé, **caractérisé en ce que** lesdits moyens de chauffage comporte au moins un allumeur céramique disposé de manière à chauffer, par contact direct, des particules déposées sur un corps filtrant dudit filtre (F) et apte à atteindre 1000°C en une durée comprise entre 3 et 6 secondes.

2. Procédé selon la revendication 1, **caractérisé en ce qu'**on commande la mise en marche desdits moyens de chauffage (1) pendant un fonctionnement au ralenti dudit moteur (M).

3. Procédé selon la revendication 1, **caractérisé en ce qu'**on commande la mise en marche desdits moyens de chauffage (1) en l'absence de combustion dans ledit moteur (M).

4. Procédé selon l'une des quelconque des revendications précédentes, **caractérisé en ce que** ledit seuil bas (C_{bas}) est inférieur ou égal à 10% du couple moteur maximal (Cₘₐₓ) dudit moteur (M).

5. Procédé selon l'une quelconque des revendications précédentes, **caractérisé en ce qu'**on commande la mise en marche desdits moyens de chauffage (1) après délivrance par ledit moteur (M) d'un couple moteur supérieur à un seuil haut (Cₕₐᵤₜ) pendant au moins une durée prédéterminée.

6. Procédé selon la revendication 5, **caractérisé en ce que** ledit seuil haut (Cₕₐᵤₜ) est supérieur ou égal à 30% du couple moteur maximal (Cₘₐₓ) dudit moteur (M).

7. Procédé selon la revendication 5, **caractérisé en ce que** ladite durée prédéterminée est supérieure ou égale à une minute.

8. Procédé selon l'une quelconque des revendications précédentes, **caractérisé en ce qu'**on ne commande ladite mise en marche desdits moyens de chauffage (1) que si ledit filtre (F) et/ou ledit moteur (M) sont à des températures supérieures à des températures de seuil respectives.

9. Procédé selon l'une quelconque des revendications précédentes, **caractérisé en ce qu'**on commande la mise en marche desdits moyens de chauffage (1) après détection d'une masse minimale de suies dans ledit filtre (F).

10. Procédé selon l'une des quelconque des revendications précédentes, **caractérisé en ce qu'**on commande la mise en marche desdits moyens de chauffage (1) au plus tard une minute après que ledit moteur (M) a commencé à délivrer un couple moteur inférieur audit seuil bas (C_{bas}).

11. Procédé selon l'une des quelconque des revendications précédentes, **caractérisé en ce qu'**on commande ladite mise en marche desdits moyens de chauffage (1) dès que-ledit moteur (M) a commencé à délivrer un couple moteur inférieur audit seuil bas (C_{bas}).

12. Procédé selon l'une quelconque des revendications précédentes, **caractérisé en ce qu'**on maintient en marche lesdits moyens de chauffage (1) pendant au moins 5 secondes après ladite mise en marche.

13. Procédé selon l'une quelconque des revendications précédentes, **caractérisé en ce qu'**on évalue ledit couple moteur délivré par ledit moteur (M), par mesure d'une position d'une pédale d'accélérateur (10).

14. Procédé selon l'une quelconque des revendications précédentes, **caractérisé en ce que** lesdits moyens de chauffage (1) comportent un point chaud dont la température augmente à partir d'une température supérieure ou égale à 20°C jusqu'à une température supérieure ou égale à 1000°C dans les 6 secondes qui suivent sa mise en marche.

15. Procédé selon la revendication 14, **caractérisé en ce que** lesdits moyens de chauffage (1) comportent des allumeurs du type Mini-Igniter®.

16. Dispositif pour la mise en oeuvre d'un procédé de décolmatage conforme à l'une quelconque des revendications précédentes, ledit dispositif comportant des moyens de chauffage (1) dudit filtre (F), des moyens de commande desdits moyens de chauffage (5) et un calculateur (7) de gestion desdits moyens de commande (5), comportant en outre des moyens de détection (9,10) de la délivrance par ledit moteur (M) d'un couple moteur inférieur à un seuil bas (C_{bas}) prédéterminé, ledit calculateur (7) commandant la mise en marche desdits moyens de chauffage (1) en réponse à ladite détection **caractérisé en ce que** lesdits moyens de chauffage (1) comporte au moins un allumeur céramique disposé de manière à chauffer, par contact direct, des particules déposées sur un corps filtrant dudit filtre (F) et apte à atteindre 1000°C en une durée comprise entre 3 et 6 secondes.

17. Dispositif selon la revendication 16, **caractérisé en ce que** des points chauds desdits moyens de chauffage (1) sont disposés à l'intérieur ou sur une surface extérieure latérale (2) dudit corps filtrant, de préférence sans faire saillie de ladite surface (2).

18. Dispositif selon l'une quelconque des revendications 16 à 17, **caractérisé en ce qu'**il comporte des moyens (15) de détection de la rotation dudit moteur (M).

## Patentansprüche

1. Verfahren zum Reinigen eines Partikelfilters (F) durch Erwärmen, wobei der Filter zum Reinigen der Abgase (G) eines Verbrennungsmotors (M), insbesondere eines Verbrennungsmotors eines Kraftfahrzeugs (V), bestimmt ist, wobei nach dem Verfahren das Starten von Heizeinrichtungen (1) des Filters (F) gesteuert wird, wenn der Motor (M) ein Motordrehmoment liefert, das unter einem vorbestimmten unteren Schwellenwert (C_{bas}) liegt, **dadurch gekennzeichnet, daß** die Heizeinrichtungen mindestens einen keramischen Zünder umfassen, der derart angeordnet ist, daß er auf einem Filterkörper des Filters (F) abgelagerte Partikel durch direkten Kontakt erwärmt, und der in der Lage ist, über einen Zeitraum zwischen 3 und 6 Sekunden 1000°C zu erreichen.

2. Verfahren nach Anspruch 1, **dadurch gekennzeichnet, daß** das Starten der Heizeinrichtungen (1) während eines Leerlaufbetriebs des Motors (M) gesteuert wird.

3. Verfahren nach Anspruch 1, **dadurch gekennzeichnet, daß** das Starten der Heizeinrichtungen (1) bei nicht erfolgender Verbrennung im Motor (M) gesteuert wird.

4. Verfahren nach einem der vorhergehenden Ansprüche, **dadurch gekennzeichnet, daß** der untere Schwellenwert (C_{bas}) kleiner als oder gleich 10% des maximalen Motordrehmoments (Cₘₐₓ) des Motors (M) ist.

5. Verfahren nach einem der vorhergehenden Ansprüche, **dadurch gekennzeichnet, daß** das Starten der Heizeinrichtungen (1) gesteuert wird, nachdem der Motor (M) zumindest während eines vorbestimmten Zeitraums ein Motordrehmoment geliefert hat, das größer als ein oberer Schwellenwert (Cₕₐᵤₜ) ist.

6. Verfahren nach Anspruch 5, **dadurch gekennzeichnet, daß** der obere Schwellenwert (Cₕₐᵤₜ) größer als oder gleich 30% des maximalen Motordrehmoments (Cₘₐₓ) des Motors (M) ist.

7. Verfahren nach Anspruch 5, **dadurch gekennzeichnet, daß** der genannte vorbestimmte Zeitraum größer als oder gleich einer Minute ist.

8. Verfahren nach einem der vorhergehenden Ansprüche, **dadurch gekennzeichnet, daß** das Starten der Heizeinrichtungen (1) erst gesteuert wird, wenn der Filter (F) und/oder der Motor (M) Temperaturen aufweisen, die über jeweiligen Schwellentemperaturen liegen.

9. Verfahren nach einem der vorhergehenden Ansprüche, **dadurch gekennzeichnet, daß** das Starten der Heizeinrichtungen (1) nach dem Erkennen einer minimalen Menge Ruß in dem Filter (F) gesteuert wird.

10. Verfahren nach einem der vorhergehenden Ansprüche, **dadurch gekennzeichnet, daß** das Starten der Heizeinrichtungen (1) spätestens eine Minute nachdem der Motor (M) begonnen hat, ein unter dem unteren Schwellenwert (C_{bas}) liegendes Motordrehmoment zu liefern, gesteuert wird.

11. Verfahren nach einem der vorhergehenden Ansprüche, **dadurch gekennzeichnet, daß** das Starten der Heizeinrichtungen (1) gesteuert wird, sobald der Motor (M) begonnen hat, ein Motordrehmoment zu liefern, das unter dem unteren Schwellenwert (C_{bas}) liegt.

12. Verfahren nach einem der vorhergehenden Ansprüche, **dadurch gekennzeichnet, daß** die Heizeinrichtungen (1) während mindestens 5 Sekunden nach dem Starten in Betrieb gehalten werden.

13. Verfahren nach einem der vorhergehenden Ansprüche, **dadurch gekennzeichnet, daß** das von dem Motor (M) gelieferte Motordrehmoment durch Messen der Position des Gaspedals (10) ausgewertet wird.

14. Verfahren nach einem der vorhergehenden Ansprüche, **dadurch gekennzeichnet, daß** die Heizeinrichtungen (1) einen heißen Punkt aufweisen, dessen Temperatur in den auf das Starten derselben folgenden 6 Sekunden von einer Temperatur größer als oder gleich 20°C bis zu einer Temperatur größer als oder gleich 1000°C steigt.

15. Verfahren nach Anspruch 14, **dadurch gekennzeichnet, daß** die Heizeinrichtungen (1) Zünder vom Typ Mini-Igniter® aufweisen.

16. Vorrichtung zur Durchführung eines Reinigungsverfahrens nach einem der vorhergehenden Ansprüche, wobei die Vorrichtung Heizeinrichtungen (1) für den Filter (F), Einrichtungen (5) zum Steuern der Heizeinrichtungen und einen Rechner (7) zum Verwalten der Steuereinrichtungen (5) und ferner Einrichtungen (9, 10) zum Erkennen des Lieferns eines Motordrehmoments durch den Motor (M), das niedriger als ein vorbestimmter unterer Schwellenwert (C_{bas}) ist, aufweist, wobei der Rechner (7) das Starten der Heizeinrichtungen (1) in Abhängigkeit von der Erkennung steuert, **dadurch gekennzeichnet, daß** die Heizeinrichtungen mindestens einen keramischen Zünder umfassen, der derart angeordnet ist, daß er auf einem Filterkörper des Filters (F) abgelagerte Partikel durch direkten Kontakt erwärmt, und der in der Lage ist, über einen Zeitraum zwischen 3 und 6 Sekunden 1000°C zu erreichen.

17. Vorrichtung nach Anspruch 16, **dadurch gekennzeichnet, daß** heiße Punkte der Heizeinrichtungen (1) im Inneren oder auf einer seitlichen Außenfläche (2) des Filterkörpers angeordnet sind, vorzugsweise ohne von der Fläche abzustehen.

18. Vorrichtung nach einem der Ansprüche 16 bis 17, **dadurch gekennzeichnet, daß** sie Einrichtungen (15) zum Erkennen der Umdrehung des Motors (M) aufweist.

## Claims

1. Method of backwashing by heating a particulate filter (F) for purifying exhaust gases (G) from an internal combustion engine (M), in particular an internal combustion engine equipping an automobile vehicle (V),
wherein starting of the heating means (1) of the filter (F) is commanded when said engine (M) is delivering an engine torque below a predetermined bottom threshold (C_{bottom}), **characterized in that** said heating means comprise at least one ceramic igniter adapted to heat, by direct contact, particles deposited on a filter body of said filter (F) and adapted to reach a temperature of 1000°C within 3 to 6 seconds.

2. Method according to claim 1, **characterized in that** starting of said heating means (1) is commanded when said engine (M) is idling.

3. Method according to claim 1, **characterized in that** starting of said heating means (1) is commanded in the absence of combustion in said engine (M).

4. Method according to any preceding claim, **characterized in that** said bottom threshold (C_{bottom}) is less than or equal to 10% of the maximum engine torque (Cₘₐₓ) of said engine (M).

5. Method according to any preceding claim, **characterized in that** starting of said heating means (1) is commanded after said engine (M) has delivered an engine torque exceeding a top threshold (Cₜₒₚ) for at least a predetermined time period.

6. Method according to claim 5, **characterized in that** said top threshold (Cₜₒₚ) is greater than or equal to 30% of the maximum engine torque (Cₘₐₓ) of said engine (M).

7. Method according to claim 5, **characterized in that** said predetermined time period is greater than or equal to one minute.

8. Method according to any preceding claim, **characterized in that** starting of said heating means (1) is commanded only if said filter (F) and/or said engine (M) are at temperatures exceeding respective threshold temperatures.

9. Method according to any preceding claim, **characterized in that** starting of said heating means (1) is commanded after detection of a minimum mass of soot in said filter (F).

10. Method according to any preceding claim, **characterized in that** starting of said heating means (1) is commanded at the latest one minute after said engine (M) has begun to deliver an engine torque below said bottom threshold (C_{bottom}).

11. Method according to any preceding claim, **characterized in that** starting of said heating means (1) is commanded as soon as said engine (M) has begun to deliver an engine torque below said bottom threshold (C_{bottom}).

12. Method according to any preceding claim, **characterized in that** said heating means (1) are maintained in operation for at least five seconds after starting.

13. Method according to any preceding claim, **characterized in that** said engine torque delivered by said engine (M) is evaluated by measuring a position of an accelerator pedal (10).

14. Method according to any preceding claim, **characterized in that** said heating means (1) comprise a hot tip whose temperature increases from a temperature greater than or equal to 20°C to a temperature greater than or equal to 1000°C within six seconds of being started.

15. Method according to claim 14, **characterized in that** said heating means (1) comprise Mini-Igniter® type igniters.

16. Device for implementing a backwashing method conforming to any preceding claim, said device comprising heating means (1) for heating said filter (F), control means (5) for controlling said heating means, and a computer (7) for managing said control means (5),
further comprising detection means (9,10) for detecting the delivery by said engine (M) of an engine torque below a predetermined bottom threshold (C_{bottom}), said computer (7) commanding starting of said heating means (1) in response to said detection, **characterized in that** said heating means (1) comprise at least one ceramic igniter adapted to heat by direct contact particles deposited on a filter body of said filter (F) and able to reach a temperature of 1000°C within 3 to 6 seconds.

17. Device according to claim 16, **characterized in that** hot tips of said heating means (1) are disposed inside said filter body or on an outside lateral surface (2) of said filter body, preferably without projecting from said surface (2).

18. Device according to any of claims 16 to 17, **characterized in that** it includes detection means (15) for detecting rotation of said engine (M).
